# FASCICULE DE BREVET EUROPEEN

(11) **EP 0 777 192 B1**
(45) Date de publication et mention de la délivrance du brevet: **19.03.2003**
(21) Numéro de dépôt: 96402554.8
(22) Date de dépôt: 27.11.1996
(51) Int. Cl.: G06K 7/08, G06K 7/10

(54) **Procédé de mise en phase d'étiquettes électroniques, station d'interrogation et étiquette électronique pour sa mise en oeuvre**
Verfahren zur Synchronisierung elektronischer Karten, Abfragestation und elektronische Karte zur Durchführung des Verfahrens
Method for phase alignment of electronic cards, interrogation station and electronic card for its implementation

(30) Priorité: 01.12.1995 FR 9514252
(43) Date de publication de la demande: 04.06.1997
(73) Titulaire: RAIMBAULT, Pierre, F-75008 Paris (FR)
(72) Inventeur: Raimbault, Pierre, 75008 Paris (FR); Goupil, Jean, 78740 Vaux sur Seine (FR)
(74) Mandataire: Pochart, François

(56) Documents cités:
- EP-A- 0 473 569
- US-A- 5 264 854

## Description

L'invention a pour objet un procédé d'interrogation à distance, à partir d'une station, d'étiquettes électroniques.

Elle concerne aussi une station d'interrogation à distance d'étiquettes électroniques, notamment pour la mise en oeuvre de ce procédé.

Elle a pour objet une étiquette électronique présentant des moyens de communication avec une station, pour recevoir des interrogations de la station et pour émettre des réponses vers la station, notamment pour la mise en oeuvre de ce procédé.

L'invention concerne aussi une combinaison d'une telle station et de telles étiquettes.

L'invention concerne généralement le domaine de l'interrogation à distance d'étiquettes électroniques à partir d'une station ou portique. Elle est susceptible d'applications nombreuses, dans des secteurs très divers. On citera par exemple:
- le contrôle, la comptabilisation et/ou la vérification d'articles achetés par un chaland dans une grande surface, et munis d'étiquettes électroniques;
- le comptage d'objets munis d'étiquettes, pour la gestion de stock dans une usine ou dans une installation industrielle;
- la reconnaissance et l'orientation d'objets munis d'étiquettes, tels que par exemple des valises dans un aéroport;
- la reconnaissance du passage d'objets munis d'une étiquette, comme par exemple des voitures à un péage, et l'échange d'informations avec les objets;
- le contrôle de l'accès à une installation ou le suivi de l'accès à une installation de personnes porteuses d'une telle étiquette électronique, etc.

D'autres applications sont possibles.

Dans toute la suite de la présente description, on emploiera simplement le terme "étiquette" pour désigner une étiquette électronique, indépendamment de son support et de son utilisation.

On utilisera généralement le terme de "portique" ou "station" pour désigner la station interrogatrice; la forme de cette station n'est pas limitée à la forme physique d'un portique.

On appelle interrogation, scrutation ou sondage, ou en anglais "polling" ou "probing" le fait pour la station d'interroger les étiquettes pour si nécessaire échanger des informations avec elles.

Il existe déjà des systèmes d'interrogation à distance d'étiquettes.

Dans le cas d'interrogation simultanée de plusieurs étiquettes, se pose le problème de la réponse simultanée ou en chevauchement des étiquettes, appelée par la suite "collision". De façon générale, il est proposé dans les documents de l'art antérieur que les étiquettes envoient des réponses présentant un format donné. susceptible d'être reconnu par la station; dans certains documents, il est proposé que la réponse des étiquettes dépende de leur code. La station peut ainsi vérifier [a validité de la réponse qu'elle a reçue, pour détecter les collisions.

Des exemples de systèmes de ce type peuvent être trouvés dans EP-A-0 495 708, EP-A-0 161 779, EP-A-0 472 472, ou encore GB-A-2 116 808, qui proposent des solutions pour détecter les collisions et les éviter.

EP-A-0 473 569 propose, dans un système de ce type, dans lequel les étiquettes émettent un message constitué de leur code, complété par un code de correction d'erreur permettant de détecter les collisions. Il est en outre proposé de synchroniser les réponses des différentes étiquettes. Voir le préambule des revendications indépendantes. US-A-5 264 854 propose que les étiquettes émettent leur réponse à un instant aléatoire dans la fenêtre de réponse, pour limiter la probabilité de collisions.

Ces solutions présentent des inconvénients: la présence d'un code de détection d'erreurs, même sous sa forme la plus sommaire, nécessite un message assez long. Ceci augmente la durée totale d'interrogation des étiquettes. Par ailleurs, le recours à des réponses à des moments aléatoires allonge aussi la durée d'interrogation.

Il a aussi été proposé que les étiquettes ne possèdent pas de source d'énergie propre, mais utilisent la puissance transmise par la station comme source d'alimentation; dans un tel cas de télé-alimentation des étiquettes, différents systèmes ont été proposés pour l'émission des réponses par les étiquettes.

Il est possible que l'étiquette émette sa réponse à une fréquence radio nettement supérieure à la fréquence de télé-alimentation. Dans ce cas, dans le bobinage de lecture de la station, on peut séparer facilement, par filtrage, la fréquence de télé-alimentation de la fréquence émise en retour. Toutefois, pour obtenir une fréquence d'émission stable et précise il faut un oscillateur à quartz ou bien un multiplicateur de fréquence ou encore un oscillateur avec asservissement de fréquence utilisant la fréquence de télé-alimentation comme référence. Ces méthodes sont coûteuses en composants ou en énergie consommée par la puce.

Il est aussi possible que l'étiquette réponde à la même fréquence que la fréquence de télé-alimentation; c'est par exemple le cas dans le document GB-A-2 116 808. Dans ce cas, pour détecter le signal émis par les étiquettes, il faut stopper l'inducteur de la station. On ne dispose plus de fréquence de référence, ou alors on est confronté au problème de coût et d'encombrement d'un oscillateur à quartz sur chaque étiquette. Utiliser la fréquence propre de résonance du bobinage ou bien un oscillateur RC (à résistance et capacité) conduirait à une grande imprécision de fréquence qui imposerait un récepteur "panoramique" capable de détecter la réponse dans plusieurs dizaines de canaux se recouvrant partiellement dans toute la plage des dérives possibles. Un tel récepteur serait complexe et coûteux.

Il a aussi été proposé, pour la réponse des étiquettes, de court-circuiter le bobinage de l'étiquette, de sorte à créer une légère variation du courant dans l'inducteur. Cette méthode, par exemple proposée dans EP-A-0 242 906, est simple et ne nécessite pas de circuit compliqué dans l'étiquette. Toutefois, la variation de courant est indétectable lorsque l'inducteur est de grande taille, c'est-à-dire lorsque le volume utile dépasse une centaine de litres.

Il a été proposé dans le document WO-A-84/03566 que la réponse de l'étiquette soit émise à une fréquence n.f_{S}, où f_{S} est la fréquence d'émission de la station. Les valeurs de n proposées sont 1, 2, ou 3, ou encore, dans un autre mode de réalisation, 1/2, 1/3, 1/4, etc. Le dispositif proposé dans l'étiquette comprend des bobinages de réception et d'émission distincts.

Le document EP-A-0 006 691 propose une étiquette utilisant un seul bobinage d'émission-réception, dans lequel des sous-harmoniques de la fréquence d'émission de la station sont obtenues par un dispositif de commutation situé entre le bobinage et un condensateur d'accord.

Un autre problème est celui de la position d'une étiquette dans le champ électromagnétique d'interrogation émis par la station. En effet, dans certaines applications, les étiquettes peuvent se présenter dans le champ d'interrogation avec une orientation dans l'espace qui est aléatoire. Si un bobinage de réception de l'étiquette se trouve dans un plan parallèle à l'induction de la station, aucun flux ne traverse le bobinage et en l'absence de tension induite, l'étiquette ne peut pas répondre.

Pour résoudre ce problème, il a été proposé dans le document EP-A-0 496 609 d'utiliser deux antennes d'émission en forme de cadre, situées dans des plans orthogonaux, et alimentés par des signaux en quadrature de phase, de sorte à réaliser un champ d'interrogation tournant.

Cette solution n'est pas satisfaisante: le champ induit reste dans ce cas dans un plan orthogonal aux deux cadres, ce qui laisse une possibilité de non détection des étiquettes situées dans ce plan.

Il a aussi été proposé EP-A-0 496 609 d'utiliser une troisième antenne d'émission en forme de cadre, située dans un plan orthogonal aux plans des deux autres antennes, et d'alimenter les trois antennes par des signaux en quadrature. Cette solution pourrait être satisfaisante dans le cas d'une seule étiquette. L'effet serait d'ailleurs le même si on utilisait trois antennes dans trois plans différents, excitées successivement deux par deux avec des signaux en quadrature. Plus généralement, l'utilisation de deux ou trois antennes avec des signaux en quadrature n'est pas satisfaisante.

L'invention propose une solution aux problèmes dus à une répartition quelconque de plusieurs étiquettes dans le volume d'analyse de la station.

Elle propose une solution au problème nouveau de détection de réponses qui peuvent interférer, par une pluralité d'étiquettes, réparties dans le volume d'analyse de la station.

Plus précisément, il est possible que plusieurs étiquettes répondent simultanément à une interrogation, ou qu'elles émettent des signaux de réponse ensemble pendant une période donnée. Ceci est normal et sans incidence sur le fonctionnement du système si les réponses émises par les étiquettes sont identiques et s'additionnent, ou si les réponses émises par les étiquettes sont en opposition de phase et se soustraient; toutetois. si l'on n'y prend pas garde il peut arriver que des étiquettes ayant des positions symétriques dans l'inducteur émettent des réponses identiques en opposition de phase, ou des réponses distinctes avec des phases relatives telles que le signal résultant capté par la boucle de lecture n'est plus détectable.

Ce problème n'avait pas été décrit dans les documents de l'art antérieur: il y était proposé que les réponses des étiquettes comportent un code de détection d'erreurs, qui était suffisamment long pour que ce problème ne soit pas identifié. C'est notamment le cas dans le système de EP-A-0 473 569: il est proposé d'utiliser un code de correction d'erreurs et de synchroniser les réponse des étiquettes. mais le problème de la phase de la réponse des étiquettes n'est pas mentionné.

Lorsque différentes étiquettes émettent au moins partiellement ensemble une réponse brève, comme c'est par exemple le cas dans la demande de brevet EP-A-0 777 194 de la demanderesse déposée le même jour que la présente demande sous le titre "Procédé d'interrogation à distance d'étiquettes, station et étiquette pour sa mise en oeuvre", ce problème nouveau se pose avec une grande acuité. L'annulation des réponses de différentes étiquettes peut être partielle ou totale, et par exemple des réponses simultanées provenant de deux étiquettes disposées tête-bêche dans l'inducteur de la station peuvent s'annuler complètement.

L'invention propose une solution à ce problème nouveau, et permet ainsi une interrogation plus rapide d'un grand nombre d'étiquettes.

Elle propose enfin une solution au problème de l'orientation des étiquettes dans l'espace. Elle permet ainsi d'interroger à distance et en même temps des étiquettes. indépendamment de leur position dans le champ d'analyse; la solution de l'invention est particulièrement adaptée au cas d'étiquettes répondant par un signal bref.

On comprend que l'utilisation d'un champ tournant, comme ce qui est suggéré dans le document EP-A-0 496 609, dans la mesure où elle implique des phases différentes dans tout lc volume utile, multiplie encore la probabilité d'apparition du problème nouveau de l'invention, et de ce point de vue, n'est pas satisfaisante.

L'invention propose un procédé d'interrogation à distance, à partir d'une station, d'étiquettes électroniques, dans lequel des étiquettes émettent par modulation d'un signal électromagnétique des réponses aux interrogations émises par la station, lesdites réponses pouvant interférer, le procédé étant caractérisé en ce qu'il comprend préalablement à l'émission des réponses par les étiquettes une étape de mise en phase des étiquettes de sorte que des étiquettes dont les bobinages se trouvent dans des plans parallèles, mais avec des orientations opposées émettent des réponses qui interfèrent sans interférences destructrices.

Dans un mode de réalisation, les étiquettes émettent simultanément une réponse commune.

L'étape de mise en phase des étiquettes peut comprendre l'émission par la station d'une commande de mise en phase.

La commande de mise en phase comprend avantageusement un arrêt de l'émission suivi de l'émission d'un signal alternatif.

L'étape de mise en phase des étiquettes peut s'effectuer pour les étiquettes en comptant les alternances d'une commande de mise en phase, et en déterminant la polarité d'une alternance de rang prédéterminé, ou en émettant une réponse vers la station présentant la polarité d'une alternance déterminée de ladite commande de mise en phase.

La réponse des étiquettes peut être émise à une fréquence sous-multiple de la fréquence d'émission de la station.

Dans un mode de réalisation, les interrogations sont émises par la station successivement dans différentes directions.

De préférence, dans ce cas, les interrogations sont émises par la station successivement dans des directions orthogonales, et avantageusement dans trois directions orthogonales.

L'invention a aussi pour objet une station d'interrogation à distance d'étiquettes électroniques, notamment pour la mise en oeuvre de ce procédé, comprenant des moyens d'émission d'interrogations vers les étiquettes par un signal électromagnétique, des moyens de réception des réponses émises par les étiquettes par modulation d'un signal électromagnétique, et des moyens de contrôle, caractérisée en ce que les moyens d'émission des interrogations sont capables d'émettre une commande de mise en phase dont la polarité d'une alternance déterminée peut être détectée par les étiquettes..

La commande de mise en phase émise par la station peut comprendre un arrêt de l'émission suivi de l'émission d'un signal alternatif.

Dans un mode de réalisation, les moyens d'émission d'interrogations comprennent des moyens de mise en régime rapide d'un signal alternatif.

Dans un autre mode de réalisation, les moyens d'émission d'interrogation comprennent:
- un circuit résonnant avec un inducteur et un condensateur d'accord ;
- des moyens d'excitation dudit circuit résonnant par une tension alternative d'excitation;
et les moyens de mise en régime rapide comprennent
- des moyens de blocage sur une alternance de ladite tension alternative d'excitation, et
- un moyen de maintien d'un courant permanent dans l'inducteur , tel qu'une résistance susceptible d'être reliée entre d'une part la masse et d'autre part un point du circuit résonnant entre l'inducteur et le condensateur d'accord .

Dans encore un autre mode de réalisation, les moyens d'émission d'interrogations sont capables d'émettre des interrogations successivement dans différentes directions, de préférence orthogonales, et de préférence au nombre de trois.

Les moyens de réception des réponses des étiquettes peuvent comprendre un bobinage de lecture, et des moyens, tels un transformateur de compensation de la tension induite par les moyens d'émission dans le bobinage de lecture .

L'invention a aussi pour objet une étiquette électronique présentant des moyens de communication avec une station, pour recevoir des interrogations de la station et pour émettre des réponses vers la station, notamment pour la mise en oeuvre d'un tel procédé, caractérisée en ce qu'elle comprend des moyens de détection d'une alternance déterminée d'une commande de mise en phase, des moyens pour déterminer la polarité de l'alternance détectée et en ce que les moyens de communication émettent une réponse vers la station présentant la polarité déterminée.

Elle a pour objet une étiquette électronique présentant des moyens de communication avec une station, pour recevoir des interrogations de la station et pour émettre des réponses vers la station, notamment pour la mise en oeuvre du procédé de l'invention, caractérisée en ce qu'elle comprend des moyens de comptage des alternances d'une commande de mise en phase, des moyens pour déterminer la polarité d'une altemance déterminée de ladite commande de mise en phase et en ce que les moyens de communication émettent une réponse vers la station présentant la polarité déterminée.

Dans un mode de réalisation de cette étiquette électronique, les moyens de communication comprennent un bobinage, et les moyens de comptage comprennent deux amplificateurs à seuil, et un compteur recevant en entrée les signaux de sortie des deux amplificateurs à seuil.

Les moyens de communication peuvent comprendre un bobinage et l'émission des réponses peut s'effectuer en modifiant le courant dans le bobinage, par exemple en le court-circuitant.

L'invention a enfin pour objet une combinaison d'une telle station et d'au moins unc telle étiquette.

D'autres avantages et caractéristiques de l'invention apparaîtront à la lecture de la description qui suit de différents modes de réalisation, donnés à titre d'exemple et en référence aux figures annexées, qui montrent:
- figure 1, un schéma de l'inducteur d'une station, selon un mode de réalisation de l'invention;
- figure 2, un chronogramme de différent paramètres dans l'inducteur de la figure 1;
- figure 3, un schéma de deux étiquettes selon l'invention;
- figure 4, un chronogramme de différentes tensions dans les étiquettes de la figure 3;
- figure 5, un schéma d'une station selon un mode de réalisation de l'invention;
- figure 6, un schéma d'une station selon un autre mode de réalisation de l'invention;

De façon générale, pour une interrogation à distance d'étiquettes, les étiquettes présentent les fonctionnalités suivantes: possibilité de communication à distance avec la station, en réception ou en émission; conservation d'un code, éventuellement reprogrammable; élaboration des réponses de l'étiquette en fonction des questions reçues depuis la station.

La station présente les fonctionnalités suivantes: possibilité de communication à distance avec les étiquettes, en réception grâce une boucle de lecture ou en émission grâce à un inducteur; élaboration des questions aux étiquettes en fonction. des réponses reçues depuis celles ci; traitement des résultats, en fonction de l'application. En d'autres termes, la station comprend des moyens d'émission d'interrogations vers les étiquettes, des moyens de réception des réponses des étiquettes, et des moyens de contrôle.

On utilise dans la suite les mots "interrogation" ou "commande" pour les échanges de la station vers les étiquettes, et le mot "réponse" pour les échanges des étiquettes vers la station.

On peut avantageusement utiliser pour l'invention les étiquettes décrites dans la demande de brevet EP-A-0 777 193 de la demanderesse déposée le même jour que la présente demande, sous le titre: "Circuit d'alimentation et de modulation pour une étiquette interrogeable à distance".

On peut aussi avantageusement utiliser en relation avec l'invention le procédé d'interrogation, la station ou les étiquettes décrites dans la demande de brevet EP-A-0 777 194 de la demanderesse déposée le même jour que la présente demande, sous le titre: "Procédé d'interrogation à distance d'étiquettes, station et étiquette pour sa mise en oeuvre".

L'invention propose une réponse au problème nouveau décrit plus haut.

Selon l'invention, lors de l'interrogation à distance, à partir d'une station, d'étiquettes électroniques qui émettent des réponses aux interrogations émises par la station pouvant interférer, on prévoit une étape de mise en phase des étiquettes préalablement à l'émission par les étiquettes des réponses.

Ainsi, et à titre d'exemple, on peut considérer deux étiquettes présentes dans le volume d'analyse de la station qui sont disposées tête bêche, et fixées sur des objets voisins. A un instant donné, dans un système connu, si ces deux étiquettes répondent par un même signal, et si ces signaux sont en opposition de phase, la station peut ne détecter aucun signal.

Grâce à l'invention, on assure que la station détectera bien un signal.

On assure ainsi, quelle que soit la longueur de la réponse, que la station détecte l'émission de réponses émises ensemble. Ceci évite que la station ne considère qu'il n'y a aucune étiquette dans le volume.

Comme décrit dans la demande de brevet précitée de la demanderesse, les étiquettes peuvent émettre simultanément une réponse commune. Dans ce cas. il est d'autant plus probable que des interférences destructrices entre les étiquettes se produisent.

L'invention permet alors d'éviter ces interférences destructrices. Elle propose dans ce cas une solution originale à la gestion des collisions: plutôt que de chercher à les détecter et à les éviter, l'invention permet de les provoquer, et de les contrôler. On peut ainsi diminuer la durée totale d'interrogation.

La réponse des étiquettes peut aussi varier dans le temps, en fonction du déroulement du procédé; la réponse des étiquettes peut aussi n'être que partiellement commune, et par exemple, on peut imaginer que la seule partie commune des réponses est un début de réponse, la fin de réponse dépendant de chaque étiquette: on pourrait aussi prévoir que certaines des étiquettes émettent une réponse pendant une durée plus importante que d'autres.

Dans toutes ces circonstances, l'étape de mise en phase des étiquettes diminue les possibilités d'erreur d'interprétation par la station.

Dans un mode de réalisation de l'invention, l'étape de mise en phase des étiquettes comprend l'émission par la station d'une commande de mise en phase. Cette commande de mise en phase permet aux étiquettes présentes dans le volume de s'accorder, en fournissant une référence temporelle. Cette commande peut être de type quelconque, dans la mesure où elle ne risque pas d'être confondue par les étiquettes avec une autre commande ou interrogation, et où elle fournit effectivement une référence temporelle reconnaissable par les étiquettes.

La commande de mise en phase peut par exemple comprendre un arrêt de l'émission suivi de l'émission d'un signal alternatif. Les étiquettes reconnaissent l'absence de signal, pendant une durée qu'elles peuvent évaluer, même de façon relativement peu précise, à l'aide d'une horloge interne. Les étiquettes, après l'absence de signal, reconnaissent le début de la présence du signal alternatif, qui peut servir de référence temporelle pour la mise en phase.

Pour la mise en phase, les étiquettes peuvent compter les alternances du signal de mise en phase, et déterminer la polarité d'une alternance de rang prédéterminé..

Ainsi, la mise en phase peut se faire par un arrêt bref de l'inducteur (100 µs par exemple) suivi d'une remise sous tension alternative. La première alternance induite dans le bobinage de l'étiquette à la suite de ce silence peut être amplifiée et détectée, et l'étiquette peut en déterminer la polarité. L'étiquette peut ainsi déterminer une référence de phase pour la logique qui va moduler le bobinage en cas de réponse.

Pour garder cette référence il suffit alors de compter les alternances successives de la tension induite. Pour toutes les étiquettes, l'émission commencera sur la même alternance dont le numéro (P) est choisi arbitrairement.

Du côté de la station sont donc prévus des moyens d'émission d'interrogations vers les étiquettes, des moyens de réception des réponses des étiquettes, et des moyens de contrôle; les interrogations comprennent une commande de mise en phase, pour permettre la mise en phase des étiquettes; cette commande de mise en phase comprend de préférence un arrêt de l'émission suivi de l'émission d'un signal alternatif, comme expliqué plus haut.

La détection de la première alternance est parfois difficile car l'inducteur de la station et la bobine de l'étiquette sont des circuits accordés et leur mise en régime est progressive, d'autant plus lente que leurs coefficients de surtension sont importants. Il en résulte que l'amplitude de la première alternance peut être relativement faible et qu'on risque de ne pas la détecter dans les étiquettes.

Les moyens d'émission d'interrogations de la station comprennent donc avantageusement des moyens de mise en régime rapide d'un signal alternatif, qui permettent d'augmenter fortement la première alternance du signal alternatif.

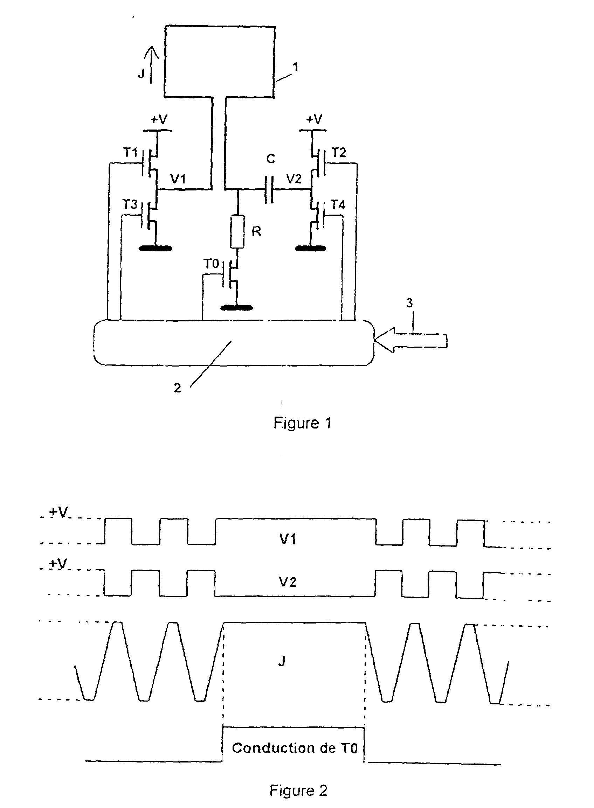

La figure 1 montre un schéma de l'inducteur d'une station, dans un tel un mode de réalisation de l'invention.

On reconnaît sur la figure 1, un circuit résonnant constitué de l'inducteur 1 et de son condensateur d'accord C.

Ce circuit résonnant est excité par une tension alternative d'excitation. Celle ci est fournie, par exemple, au moyen d'un pont en "H" constitué de 4 transistors T1, T2, T3 et T4.

Plus précisément, les transistors T1 et T3 sont montés en série entre une source de tension öV et la masse; de même. les transistors T2 et T4 sont montés en série entre une source de tension +V et la masse.

L'ensemble constitué de l'inducteur 1 et du condensateur C est relié d'une part à un point entre les transistors T1 et T3, et d'autre part, à un point entre les transistors T2 et T4.

Les transistors sont montés de sorte à pouvoir travailler comme des interrupteurs, faisant passer alternativement le courant par le chemin {öV. T1. inducteur, C, T4, masse} ou par le chemin {+V, T2, inducteur, C, T3, masse}.

Le dispositif de la figure 1 comprend un circuit de commande 2, recevant les instructions des moyens de contrôle de la station, comme symbolisé par la flèche 3. Le dispositif de commande est relié à la base ou grille des transistors T1 à T4 pour les rendre passants ou bloqués.

Le dispositif de la figure 1 comprend en outre une résistance de limitation R et un transistor T0, qui sont montés en série, entre d'une part la masse et d'autre part un point du circuit résonnant entre l'inducteur 1 et le condensateur C.

Le transistor T0 est monté de sorte à travailler comme un interrupteur, entre la masse et la résistance R. Il est commandé aussi par le circuit de commande 2.

Le fonctionnement du dispositif de la figure 1 est décrit en référence à la figure 2 qui montre un chronogramme de différent paramètres dans l'inducteur de la figure 1.

On a représenté de bas en haut sur la figure 2 les tensions respectives V1 et V2, au point de montage de l'inducteur et du condensateur entre les transistors T1 et T3, d'une part, et au point de montage de l'inducteur et du condensateur entre les transistors T2 et T4, d'autre part; le courant J dans l'inducteur, dans le sens de la flèche J sur la figure 1, ainsi que le courant de commande du transistor T0. Lorsque ce courant passe à la valeur logique "1", le transistor T0 est conducteur.

En régime normal, comme représenté sur la partie gauche de la figure 2. le circuit résonnant constitué de l'inducteur et de son condensateur d'accord (C) est alimenté au moyen du pont en "H" constitué des 4 transistors T1, T2, T3 et T4. Ces transistors travaillent comme des interrupteurs et sont pilotés à la fréquence de résonance de l'inducteur par le circuit de commande.

T1 et T4 sont conducteurs pendant une alternance, T2 et T3 étant bloqués, puis T2 et T3 conduisent dans l'alternance suivante, pendant que T1 et T4 se bloquent à leur tour.

Une tension d'alimentation (source V) de 10 à 20 Volts suffit pour obtenir une tension proche de 1000 Volts aux bornes de l'inducteur. donc un courant suffisant pour alimenter les étiquettes.

Pour créer un "silence" suivi d'un redémarrage immédiat de l'inducteur. on maintient T1 et T4 conducteurs (T2 et T3 bloqués) et on rend conducteur le transistor T0 à l'instant précis où le courant dans l'inducteur passe par sa valeur maximale. La résistance (R) est ajustée de façon à ce que le courant qui traverse T0 soit égal à cette valeur de crête. Cette situation est représentée à la figure 2, vers le milieu de la figure.

On peut rester ainsi aussi longtemps qu'il est nécessaire, puis on bloque T0 et on recommence à actionner le pont en "H" avec la phase convenable. Le circuit oscillant se trouve ainsi instantanément à son amplitude de régime et la première alternance est facilement détectable en sortie du bobinage des étiquettes.

Les étiquettes peuvent ensuite compter les alternances à partir de cette commande de mise en phase, pour répondre.

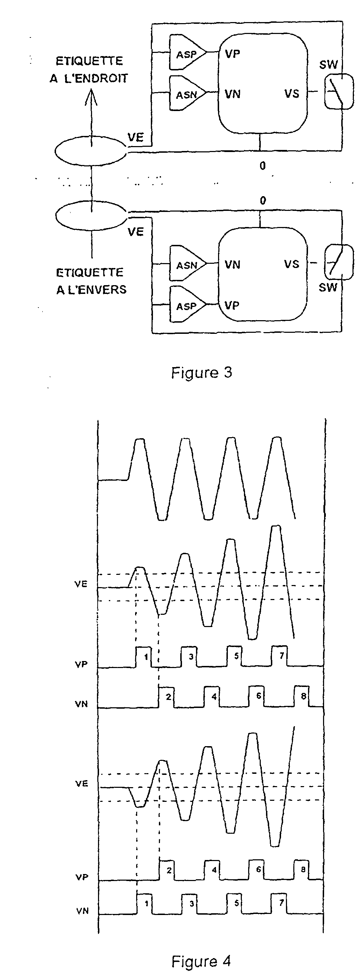

On décrit maintenant la réception d'une telle commande de mise en phase par des étiquettes. La figure 3 montre un schéma de deux étiquettes selon l'invention. Pour plus de clarté dans l'explication, on a représenté deux étiquettes qui se trouvent tête bêche, c'est à dire dont les bobinages se trouvent dans des plans parallèles, mais avec des orientations opposées. Autrement dit, ces deux bobines sont traversées dans des sens différents par le flux symbolisé par la flèche de la figure 3.

Si ces deux étiquettes répondent simultanément à une interrogation, par une même réponse, et sans la mise en phase de l'invention, les signaux seront émis en opposition de phase si bien que le signal résultant capté par la boucle de lecture n'est plus détectable.

C'est le nouveau problème de l'invention.

Dans le cas de la figure 3, selon l'orientation du plan du bobinage le signal de mise en phase est vu tantôt comme une impulsion positive et tantôt comme une impulsion négative, comme indiqué par les tensions VE dans la figure 4.

On prévoit dans l'étiquette des moyens pour compter les alternances d'une commande de mise en phase. Ces moyens comprennent par exemple deux amplificateurs à seuil connectés à la tension VE fournie par le bobinage.

Le premier amplificateur à seuil ASP est à seuil positif et fournit en sortie une tension logique VP qui transite à 1 chaque fois que la tension VE passe au dessus d'un seuil positif. Ce seuil correspond avantageusement à la valeur minimale de la tension induite dans le bobinage d'une étiquette se trouvant dans le volume d'analyse de la station; on peut considérer un exemple de +0,5 Volt. Le second amplificateur à seuil ASN fait de même avec une tension logique VN qui transite à 1 chaque fois que la tension VE passe en dessous du seuil négatif (-0,5 Volt par exemple).

Un compteur est actionné par les transitions positives de VP ainsi que de VN, et fournit en sortie le numéro de l'alternance en cours.

La mise à zéro préalable de ce compteur se fait par un circuit temporisateur classique (non représenté) qui se déclenche lorsqu'une absence de porteuse est détectée, c'est-à-dire lorsqu'aucune transition de VP ou de VN n'apparaît pendant un temps supérieur à une dizaine de périodes, par exemple. Ce temps peut être évalué au moyen d'une horloge interne à la puce, dont la précision n'est pas critique (20 à 30%). Ce temps correspond, avec une marge de sécurité, au temps d'interruption de l'émission dans la commande de mise en phase.

Ceci permet une synchronisation de l'émission des réponses par les étiquettes. Pour assurer en outre une mise en phase, diverses solutions sont possibles; une solution consiste à émettre une réponse dont la polarisation est celle de la première alternance reçue; une autre solution est de choisir d'émettre une réponse dont la polarité est celle d'une alternance déterminée autre que la première.

Ainsi, dans le cas de la figure 3, on comprend que si une étiquette reçoit une première alternance positive, l'autre reçoit une première alternance négative; si les deux étiquettes doivent émettre en même temps une réponse identique, les polarités des deux réponses doivent être opposées pour éviter les interférences destructrices.

Dans un mode de réalisation, il est proposé que les moyens de communication comprennent un bobinage et que l'émission des réponses s'effectue en court-circuitant le bobinage. Ceci permet d'émettre une réponse dont la polarité est nécessairement celle de l'alternance en cours d'émission, ce qui assure l'absence d'interférences destructrices.

La réponse de l'étiquette peut donc s'effectuer par court-circuit du bobinage au moyen d'un dispositif analogue à un interrupteur - "switch" SW sur la figure 3, commandé par les circuits logiques de l'étiquette au moyen d'une tension VS, par exemple la tension de sortie du compteur. Cet interrupteur SW n'étant pas polarisé agira de façon semblable sur une alternance de numéro donné, qu'elle soit positive ou négative. La variation de tension induite dans la boucle de lecture de l'inducteur sera de même polarité dans les deux cas : un courant positif dans un bobinage à l'endroit donnant le même effet qu'un courant négatif dans un bobinage à l'envers. On assure ainsi, avec des moyens simples, la mise en phase des étiquettes.

La figure 4 montre un chronogramme de différentes tensions dans les étiquettes de la figure 3. On a représenté de haut en bas:
- la tension aux bornes de l'inducteur de la station;
- la tension VE aux bornes de l'inducteur de la première étiquette de la figure 3;
- la tension VP de sortie de l'amplificateur ASP de la première étiquette de la figure 3;
- la tension VN de sortie de l'amplificateur ASN de la première étiquette de la figure 3;
- la tension VE aux bornes de l'inducteur de la deuxième étiquette de la figure 3;
- la tension VP de sortie de l'amplificateur ASP de la deuxième étiquette de la figure 3;
- la tension VN de sortie de l'amplificateur ASN de la deuxième étiquette de la figure 3;

On a en outre noté sur les tensions VN et VP les numéros des alternances. On constate sur la figure 4 que les deux étiquettes présentent des tensions aux bornes de leur inducteur de polarité différente; de ce fait, la première étiquette compte la première alternance sur VP, et la deuxième étiquette compte la première alternance sur VN. Mais, à un instant donné, les compteurs des deux étiquettes fournissent des résultats identiques.

Dans d'autres modes de réalisations, la mise en phase peut aussi se faire en déterminant la polarité d'une alternance et en commandant des moyens d'émission pour émettre une réponse dont la polarité est la polarité ainsi déterminée. Ceci peut être avantageux si par exemple les étiquettes présentent des bobinages d'émission et de réception distincts.

On décrit maintenant plus précisément l'émission et la réception de la réponse des étiquettes.

Pour pouvoir utiliser la fréquence de télé-alimentation Fta comme référence et détecter convenablement la réponse de l'étiquette malgré la forte amplitude de la tension induite par l'inducteur de la station dans la boucle de lecture de la station, on utilise comme fréquence de réponse un sous-multiple de Fta qui s'obtient au moyen d'un simple diviseur de fréquence. Le plus évident est d'utiliser Fta/2, mais on pourrait envisager d'utiliser d'autres sous-multiples, Fta/k, où k est un entier.

Dans ce cas, et comme expliqué plus haut en référence à la figure 3, l'émission d'une réponse peut se faire en court-circuitant le bobinage de l'étiquette pendant les alternances paires et laisser l'interrupteur SW ouvert pendant les alternances impaires. Grâce à la mise en concordance de phase des étiquettes comme indiqué plus haut, on évite les annulations éventuelles lors de la réponse simultanée de plusieurs étiquettes.

Bien entendu, de façon analogue, pour une fréquence Fta/k, on ferme l'interrupteur SW pendant k périodes, puis on l'ouvre pendant les k périodes suivantes.

Pour plus de détails quant à la structure possible de l'étiquette, on se reportera à la demande de brevet EP-A-0 777 193.

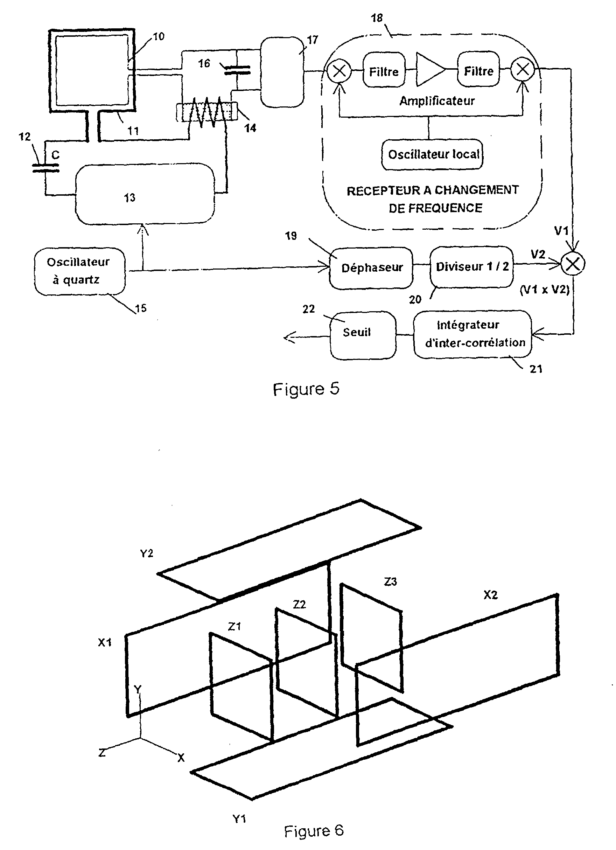

La figure 5 montre un schéma d'une station selon un mode de réalisation de l'invention; la station de la figure est représentée dans le cas d'une fréquence d'émission des étiquettes de Fta/2: la modification pour passer à Fta/k est immédiate pour l'homme du métier.

La station de la figure 5 présente une boucle de lecture 10 parallèle à l'inducteur 11 permettant l'émission des interrogations. L'inducteur est monté en série dans un circuit qui comprend un condensateur d'accord 12, un amplificateur de puissance 13, et le primaire d'un transformateur de compensation 14. L'amplificateur de puissance 13 est piloté par un oscillateur à quartz 15, et par les moyens de contrôle de la station, qui ne sont pas représentés.

La boucle de lecture 10 est montée en série dans un circuit qui comprend un condensateur d'accord 16, et le secondaire du transformateur de compensation 14.

Dans une telle configuration, le signal induit par les étiquettes dans la boucle de lecture 10 a typiquement une amplitude de l'ordre de 100 µV alors que le signal induit dans cette même boucle 10 par le fonctionnement de l'inducteur 11 atteint plusieurs centaines de volts.

La présence du transformateur de compensation 14 permet de compenser la tension induite dans la boucle de lecture par l'inducteur; la tension résiduelle peut ainsi être ramenée autour de 1 Volt.

Aux bornes du condensateur 16 du circuit de lecture est branché un filtre 17. qui fournit un signal de sortie filtré pour éliminer les composantes à la fréquence de téléalimentation Fta. On peut amplifier ce signal de sortie, par exemple à l'aide d'un récepteur à changement de fréquence 18. La tension de sortie V1 de ce récepteur à changement de fréquence fournit un signal à la fréquence Fta/2 dans une plage de fréquence utilisable.

La tension V1 est ensuite utilisée pour la détection du signal utile. Comme la fréquence Fta/2 est rigoureusement connue et disponible en local, et comme la phase du signal utile est stable, on peut utiliser des méthodes classiques de détection synchrone ou d'inter-corrélation, dont l'efficacité augmente proportionnellement à la durée de la réponse.

La tension V1 sortant du récepteur est multipliée avec une tension de référence V2, provenant de l'oscillateur 15 qui pilote l'inducteur, via un déphaseur contrôlable 19 et un diviseur de fréquence 20.

Le signal résultant V1 x V2 est fourni à un intégrateur d'inter-corrélation 21, et ensuite à un détecteur à seuil 22.

On règle le déphaseur 19 de façon à obtenir une tension maximale en sortie de l'intégrateur.

Ce mode de réalisation permet une détection simple et efficace des réponses des étiquettes.

La figure 6 montre un schéma d'une station selon un autre mode de réalisation de l'invention.

Comme expliqué plus haut, dans certaines applications l'orientation des étiquettes est aléatoire; c'est par exemple le cas d'articles mis en vrac.

Si la télé-alimentation est faite au moyen d'un inducteur unique il existe en chaque point du volume une orientation telle que le plan du bobinage se trouve parallèle à l'induction. Dans ce cas le flux traversant le bobinage est nul, il n'y a pas de tension induite, l'étiquette ne fonctionne pas et ne peut donc pas être prise en compte.

La solution proposée dans EP-A-0 496 609 d'alimentation en diphasé de deux enroulements orthogonaux ne convient pas car la phase de la tension induite varie en fonction de la position dans le volume, ce qui peut entraîner d'autant plus facilement des interférences destructrices entre des réponses de diverses étiquettes, sans que l'on puisse appliquer la mise en phase de l'invention. C'est le cas typiquement de l'annulation de la réponse d'une étiquette par la réponse d'une autre étiquette se trouvant en opposition de phase, par exemple dans une position symétrique par rapport à l'axe du champ tournant.

Pour cette même raison de non concordance des phases une alimentation en triphasé des 3 enroulements est également inutilisable. De même, une alimentation de trois enroulements deux à deux est inutilisable.

L'invention propose que les interrogations soient émises par la station successivement dans différentes directions, de préférence des directions orthogonales, avantageusement au nombre de trois.

L'analyse successive dans les trois directions permet de détecter toutes les étiquettes, en assurant une mise en phase. Bien entendu, en fonction de l'application, une ou deux directions peuvent suffire.

On peut réaliser un inducteur "tri-axe" comportant trois enroulements dont les axes devront être pratiquement orthogonaux, comme représenté sur la figure 6, en vue éclatée, comportant:
- un enroulement créant un champ selon une direction X (spires X1, X2);
- un enroulement créant un champ selon une direction Y (spires Y1, Y2);
- un enroulement créant un champ selon une direction Z (spires Z1, Z2, Z3).

Une séquence de lecture complète sera effectuée en alimentant chacun des enroulements, les deux autres étant à l'arrêt.

Dans le pire cas une étiquette peut être parallèle aux inductions de deux enroulements mais elle recevra un flux non nul du troisième. Selon sa position et son orientation une étiquette sera reconnue dans une, deux ou trois séquences.

Il sera donc indispensable, à la fin du processus, de comparer les listes d'étiquettes reconnues et d'éliminer les répétitions éventuelles.

Les boucles de lecture, non représentées sur la figure 6, sont parallèles aux spires de l'inducteur auquel elles sont affectées.

Bien entendu, d'autres modes de réalisation sont possibles.

## Revendications

1. Procédé d'interrogation à distance, à partir d'une station, d'étiquettes électroniques, dans lequel des étiquettes émettent par modulation d'un signal électromagnétique des réponses aux interrogations émises par la station, lesdites réponses pouvant interférer, le procédé étant **caractérisé en ce qu'**il comprend préalablement à l'émission des réponses par les étiquettes une étape de mise en phase des étiquettes de sorte que des étiquettes dont les bobinages se trouvent dans des plans parallèles, mais avec des orientations opposées émettent des réponses qui interfèrent sans interférences destructrices.

2. Procédé selon la revendication 1, **caractérisé en ce que** les étiquettes émettent simultanément une réponse commune.

3. Procédé selon la revendication 1 ou 2, **caractérisé en ce que** l'étape de mise en phase des étiquettes comprend l'émission par la station d'une commande de mise en phase.

4. Procédé selon la revendication 3, **caractérisé en ce que** la commande de mise en phase comprend un arrêt de l'émission suivi de l'émission d'un signal alternatif.

5. Procédé selon la revendication 3 ou 4, **caractérisé en ce que** l'étape de mise en phase des étiquettes s'effectue pour les étiquettes en comptant des alternances d'une commande de mise en phase, et en déterminant la polarité d'une alternance de rang prédéterminé, ou en émettant une réponse vers la station présentant la polarité d'une alternance déterminée de ladite commande de mise en phase.

6. Procédé selon l'une des revendications 1 à 5, **caractérisé en ce que** la réponse des étiquettes est émise à une fréquence sous-multiple de la fréquence d'émission de la station.

7. Procédé selon l'une des revendications 1 à 6, **caractérisé en ce que** les interrogations sont émises par la station successivement dans différentes directions.

8. Procédé selon la revendication 7, **caractérisé en ce que** les interrogations sont émises par la station successivement dans des directions orthogonales.

9. Procédé selon la revendication 7 ou 8, **caractérisé en ce que** les interrogations sont émises par la station successivement dans trois directions orthogonales.

10. Station d'interrogation à distance d'étiquettes électroniques, notamment pour la mise en oeuvre du procédé selon l'une des revendications 1 à 9, comprenant des moyens d'émission d'interrogations vers les étiquettes par un signal électromagnétique, des moyens de réception des réponses émises par les étiquettes par modulation d'un signal électromagnétique, et des moyens de contrôle, **caractérisée en ce que** les moyens d'émission des interrogations sont capables d'émettre une commande de mise en phase dont la polarité d'une alternance déterminée peut être détectée par les étiquettes.

11. Station selon la revendication 10, **caractérisée en ce que** la commande de mise en phase comprend un arrêt de l'émission suivi de l'émission d'un signal alternatif.

12. Station selon la revendication 10 ou 11, **caractérisée en ce que** les moyens d'émission d'interrogations comprennent des moyens de mise en régime rapide d'un signal alternatif.

13. Station selon la revendication 12, **caractérisée en ce que** les moyens d'émission d'interrogation comprennent
- un circuit résonnant avec un inducteur (L) et un condensateur d'accord (C);
- des moyens d'excitation dudit circuit résonnant par une tension alternative d'excitation;
et **en ce que** les moyens de mise en régime rapide comprennent
- des moyens de blocage sur une alternance de ladite tension alternative d'excitation, et
- un moyen de maintien d'un courant permanent dans l'inducteur (L), tel qu'une résistance susceptible d'être reliée entre d'une part la masse et d'autre part un point du circuit résonnant entre l'inducteur (L) et le condensateur d'accord (C).

14. Station selon la revendication 13, **caractérisée en ce que** les moyens d'émission d'interrogations sont capables d'émettre des interrogations successivement dans différentes directions, de préférence orthogonales, et de préférence au nombre de trois.

15. Station selon l'une des revendications 10 à 14, **caractérisée en ce que** les moyens de réception des réponses des étiquettes comprennent un bobinage de lecture (10), et des moyens, tels un transformateur (14), de compensation de la tension induite par les moyens d'émission dans le bobinage de lecture (10).

16. Etiquette électronique présentant des moyens de communication avec une station, pour recevoir des interrogations émises par la station par modulation d'un signal électromagnétique et pour émettre des réponses vers la station par modulation d'un signal électromagnétique, notamment pour la mise en oeuvre du procédé selon l'une des revendications 1 à 9, **caractérisée en ce qu'**elle comprend des moyens de détection d'une alternance déterminée d'une commande de mise en phase, des moyens pour déterminer la polarité de l'alternance détectée et **en ce que** les moyens de communication émettent une réponse vers la station présentant la polarité déterminée.

17. Etiquette électronique présentant des moyens de communication avec une station, pour recevoir des interrogations émises par la station par modulation d'un signal électromagnétique et pour émettre des réponses vers la station par modulation d'un signal électromagnétique, notamment pour la mise en oeuvre du procédé selon l'une des revendications 1 à 9, **caractérisée en ce qu'**elle comprend des moyens de comptage des alternances d'une commande de mise en phase, des moyens pour déterminer la polarité d'une alternance déterminée de ladite commande de mise en phase et **en ce que** les moyens de communication émettent une réponse vers la station présentant la polarité déterminée.

18. Etiquette électronique selon la revendication 17, **caractérisée en ce que** les moyens de communication comprennent un bobinage, et **en ce que** les moyens de comptage comprennent deux amplificateurs à seuil (ASP, ASN), et un compteur recevant en entrée les signaux de sortie des deux amplificateurs à seuil.

19. Etiquette électronique selon l'une des revendications 16 à 18, **caractérisée en ce que** les moyens de communication comprennent un bobinage et **en ce que** l'émission des réponses s'effectue en modifiant le courant dans le bobinage, par exemple en le court-circuitant.

20. Combinaison d'une station selon l'une des revendications 10 à 15 et d'au moins une étiquette selon l'une des revendications 16 à 19.

## Claims

1. A method for remote polling of electronic tags from a station in which the tags send, by modulating an electromagnetic signal, responses to polling signals sent by the station, said responses being able to interfere, the method being **characterised in that** it comprises, prior to the tags sending their responses, a step in which the tags are brought into phase whereby tags the windings of which are in parallel planes, but of opposite orientation, send responses which interfere without destructive interference..

2. The method according to claim 1, **characterized in that** the tags simultaneously send a common response.

3. The method according to claim 1 or 2, **characterized in that** the step in which the tags are brought into phase comprises sending of a phasing command by said station.

4. The method according to claim 3, **characterized in that** said phasing command comprises breaking off sending followed by sending of an alternating signal.

5. The method according to claim 3 or 4, **characterized in that** the step in which the tags are brought into phase is carried out, at a tag, by counting half waves of a phasing command and determining a polarity of a half wave or alternation of a predetermined rank or by sending a response to the station having the polarity of a determined half wave in said phasing command.

6. The method according to one of claims 1 to 5, **characterized in that** the response from tags is sent at a frequency which is a sub-multiple of a station send frequency.

7. The method according to one of claims 1 to 6, **characterized in that** polling signals are sent by said station successively in different directions.

8. The method according to claim 7, **characterized in that** polling signals are sent by said station successively in orthogonal directions.

9. The method according to claim 7 or 8, **characterized in that** polling signals are sent by said station successively in three orthogonal directions.

10. A station for remotely polling electronic tags, notably for carrying out the method according to one of Claims 1-9, comprising means for sending polling signals to said tags by an electromagnetic signal, means for receiving responses sent from the tags by modulating an electromagnetic signal, and verifying means, **characterised in that** the polling signal sending means are capable of sending a phasing command the polarity of a determined alternation of which can be detected by said tags.

11. The station according to claim 10 **characterized in that** said command for bringing said tags into phase comprises a break in sending followed by the sending of an altemating signal.

12. The station according to claim 10 or 11 **characterized in that** the means for sending polling signals include means for rapidly bringing an alternating signal to a steady state.

13. The station according to claim 12 **characterized in that** the means for sending polling signals comprise:
- a resonant circuit with an inductor (L) and a tuning capacitor (C);
- means for exciting said resonant circuit with an excitation alternating voltage;
and **in that** the means for rapidly bringing an alternating signal to a steady state comprise:
- means for blocking said excitation alternating voltage at one half wave, and
- means for maintaining a permanent current in said inductor (L) such as a resistor one end of which is connected to a point in said resonant circuit between said inductor (L) and said tuning capacitor (C), and another end of which can be connected to ground.

14. The station according to claim 13, **characterized in that** the means for sending polling signals are capable of successively sending polling signals in different directions, preferably orthogonal directions, and preferably three in number.

15. The station according to one of claims 10 to 14, **characterized in that** the means for receiving responses from said tags comprise a read coil (10) and means such as a transformer (14) for balancing out a voltage induced in said read coil (10) by said sending means.

16. An electronic tag having means for communicating with a station, for receiving polling from said station by modulation of an electromagnetic signal and for sending responses to the station by modulating an electromagnetic signal, notably for carrying out the method according to one of Claims 1-9, characterised as that it comprises means for detecting a determined alternation of a phasing command, means for determining the polarity of the altemation of detected and means for communicating which send a response to said station having the determined polarity.

17. An electronic tag having means for communicating with a station, for receiving polling from said station by modulation of an electromagnetic signal and for sending responses to the station by modulating an electromagnetic signal, notably for carrying out the method according to one of Claims 1-9, characterised as that it comprises means for counting the waves of a phasing command, means for determining the polarity of a determined alternation of said phasing commands and means for communicating which send a response to said station having the determined polarity.

18. The electronic tag according to claim 17, **characterized in that** said means for communicating with a station comprise coil means and in which said counting means comprise two threshold amplifiers (ASP, ASN) and a counter receiving output signals of said two threshold amplifiers as its input signal.

19. The electronic tag according to one of claims 16 to 18, **characterised in that** the communication means comprise a coil and **in that** sending of responses is performed by modifying the current in said coil, for example by short-circuiting it.

20. A combination of a station according to any one of claims 10 to 15 and an electronic tag according to any one of claims 16 to 19.

## Patentansprüche

1. Verfahren zur Fernabfrage von elektronischen Etiketten durch eine Station, bei dem die Etiketten durch Modulation eines elektromagnetischen Signals Antworten auf durch die Station emittierte Abfragen senden, wobei die Antworten möglicherweise interferieren, **dadurch gekennzeichnet, daß** vor der Emission der Antworten durch die Etiketten ein Schritt der Phasengleichschaltung der Etiketten in der Weise vorgenommen wird, daß Etiketten, deren Wicklungen sich in parallelen Ebenen bei jedoch entgegengesetzten Orientierungen befinden, Antworten emittieren, die ohne auslöschende Interferenzen interferieren.

2. Verfahren nach Anspruch 1, **dadurch gekennzeichnet, daß** die Etiketten gleichzeitig eine gemeinsame Antwort emittieren.

3. Verfahren nach Anspruch 1 oder 2, bei dem der Schritt der Phasengleichschaltung der Etiketten die Emission eines Phasengleichschaltbefehls durch die Station beinhaltet.

4. Verfahren nach Anspruch 3, **dadurch gekennzeichnet, daß** der Phasengleichschaltungsbefehl eine Sendeunterbrechung gefolgt von dem Senden eines Wechselsignals aufweist.

5. Verfahren nach Anspruch 3 oder 4, **dadurch gekennzeichnet, daß** der Schritt der Phasengleichschaltung der Etiketten bei den Etiketten in der Weise erfolgt, daß Halbwellen eines Phasengleichschaltungsbefehls gezählt werden und die Polarität einer Halbwelle mit vorbestimmter Rangfolge ermittelt wird, oder dadurch, daß zu der Station eine Antwort gesendet wird, welche die Polarität einer vorbestimmten Halbwelle des Phasengleichschaltungsbefehls angibt.

6. Verfahren nach einem der Ansprüche 1 bis 5, **dadurch gekennzeichnet, daß** die Antwort der Etiketten bei einer Frequenz gesendet wird, die ein Teilvielfaches der Sendefrequenz der Station ist.

7. Verfahren nach einem der Ansprüche 1 bis 6, **dadurch gekennzeichnet, daß** die Abfragen von der Station sukzessive in unterschiedliche Richtungen emittiert werden.

8. Verfahren nach Anspruch 7, **dadurch gekennzeichnet, daß** die Abfragen von der Station sukzessive in zueinander orthogonale Richtungen emittiert werden.

9. Verfahren nach Anspruch 7 oder 8, **dadurch gekennzeichnet, daß** die Abfragen von der Station sukzessive in drei orthogonale Richtungen emittiert werden.

10. Fernabfragestation für elektronische Etiketten, insbesondere zur Durchführung des Verfahrens nach einem der Ansprüche 1 bis 9, umfassend eine Abfrage-Sendeeinrichtung zum Senden von Abfragen zu den Etiketten in Form eines elektromagnetischen Signals, eine Empfangseinrichtung für Antworten, die von den Etiketten gesendet werden durch Modulation eines elektromagnetischen Signals, und eine Steuereinrichtung, **dadurch gekennzeichnet, daß** die Abfragen-Sendeeinrichtung in der Lage ist, einen Phasengleichschaltungsbefehl zu emittieren, von dem die Polarität einer vorbestimmten Halbwelle seitens der Etiketten detektiert werden kann.

11. Station nach Anspruch 10, **dadurch gekennzeichnet, daß** der Phasengleichschaltbefehl eine Sendepause gefolgt von der Emission eines Wechselsignals umfaßt.

12. Station nach Anspruch 10 oder 11, **dadurch gekennzeichnet, daß** die Abfrage-Sendeeinrichtung eine Einrichtung aufweist, mit der ein Wechselsignal in einen rasch schwingenden Zustand bringbar ist.

13. Station nach Anspruch 12, **dadurch gekennzeichnet, daß** die Abfrage-Sendeeinrichtung aufweist:
- einen Resonanzkreis mit einer Induktivität (L) und einem Abstimmkondensator (C);
- eine Erregereinrichtung zum Erregen des Resonanzkreises durch eine Wechselspannungserregung;
und daß die Einrichtung zum Erreichen des schnellen Schwingungszustands aufweist:
- eine Sperreinrichtung zum Sperren einer Halbwelle der Erreger-Wechselspannung; und
- eine Einrichtung zum Aufrechterhalten eines Dauerstroms in der Induktivität (L), so zum Beispiel einen Widerstand, der zwischen einerseits Masse und andererseits einen Punkt des Resonanzkreises zwischen der Induktivität (L) und dem Abstimmkondensator (C) geschaltet werden kann.

14. Station nach Anspruch 13, **dadurch gekennzeichnet, daß** die Abfrage-Sendeeinrichtung in der Lage ist, Abfragen sukzessive in verschiedene Richtungen, vorzugsweise orthogonale Richtungen und vorzugsweise in einer Anzahl von drei Richtungen zu senden.

15. Station nach einem der Ansprüche 10 bis 14, **dadurch gekennzeichnet, daß** die Empfangseinrichtung für Antworten der Etiketten eine Lesewicklung (10) und eine Kompensationseinrichtung, beispielsweise einen Transformator (14), für die Spannung aufweist, die von der Sendeeinrichtung in der Lesewicklung (10) induziert wird.

16. Elektronisches Etikett mit einer Kommunikationseinrichtung zum Kommunizieren mit einer Station, um Abfragen zu empfangen, die von der Station durch Modulation eines elektromagnetischen Signals gesendet werden, und um Antworten zu der Station durch Modulation eines elektrischen Signals zu senden, insbesondere zur Durchführung des Verfahrens nach einem der Ansprüche 1 bis 9, **dadurch gekennzeichnet, daß** es eine Detektoreinrichtung zum Erfassen einer vorbestimmten Halbwelle eines Phasengleichschaltbefehls enthält, eine Einrichtung zum Feststellen der Polarität der erfaßten Halbwelle aufweist, und eine Kommunikationseinrichtung aufweist, die eine Antwort zu der Station sendet, welche die vorbestimmte Polarität aufweist.

17. Elektronisches Etikett mit einer Kommunikationseinrichtung zum Kommunizieren mit einer Station, um Abfragen zu empfangen, die von der Station durch Modulation eines elektromagnetischen Signals gesendet werden, und um Antworten zu der Station durch Modulation eines elektromagnetischen Signals zu senden, insbesondere zum Durchführen des Verfahrens nach einem der Ansprüche 1 bis 9, **dadurch gekennzeichnet, daß** es eine Zähleinrichtung für Halbwellen eines Phasengleichschaltbefehls enthält, außerdem eine Einrichtung zum Bestimmen der Polarität einer vorbestimmten Halbwelle des Phasengleichschaltbefehls, und daß die Kommunikationseinrichtung eine Antwort zu der Station sendet, die die vorbestimmte Polarität aufweist.

18. Elektronisches Etikett nach Anspruch 17, **dadurch gekennzeichnet, daß** die Kommunikationseinrichtung eine Wicklung enthält, und daß die Zähleinrichtung zwei Schwellenwertverstärker (ASP, ASN) und einen Zähler aufweist, der am Eingang die Ausgangssignale der beiden Schwellenwertverstärker empfängt.

19. Elektronisches Etikett nach einem der Ansprüche 16 bis 18, **dadurch gekennzeichnet, daß** die Kommunikationseinrichtung eine Wicklung aufweist, und daß das Senden von Antworten dadurch geschieht, daß der Stromfluß in der Wicklung modifiziert wird, beispielsweise dadurch, daß der Strom kurzgeschlossen wird.

20. System aus einer Station nach einem der Ansprüche 10 bis 15 und mindestens einem Etikett nach einem der Ansprüche 16 bis 19.
